# EUROPEAN PATENT SPECIFICATION

(11) **EP 2 531 707 B1**
(45) Date of publication and mention of the grant of the patent: **11.04.2018**
(21) Application number: 11752362.1
(22) Date of filing: 04.02.2011
(51) Int. Cl.: F02B 25/14, F02B 25/20, F02B 33/04, F02D 41/30

(54) **TWO-STROKE, FUEL INJECTED INTERNAL COMBUSTION ENGINES FOR UNMANNED AIRCRAFT AND ASSOCIATED SYSTEMS AND METHODS**
ZWEITAKTBRENNKRAFTMASCHINE MIT KRAFTSTOFFEINSPRITZUNG FÜR UNBEMANNTES LUFTFAHRZEUG, SOWIE ZUGEHÖRIGE SYSTEME UND VERFAHREN
MOTEURS À COMBUSTION INTERNE À INJECTION À DEUX TEMPS POUR AVION SANS PILOTE ET SYSTÈMES ET PROCÉDÉS ASSOCIÉS

(30) Priority: 05.02.2010 US 302034 P
(43) Date of publication of application: 12.12.2012
(73) Proprietor: Insitu, Inc., Bingen, WA 98605 (US)
(72) Inventor: FFIELD, Paul, Bingen, WA 98605 (US); SIMMONS, Chuck, Bingen, WA 98605 (US); STEBBINS, Glen, Bingen, WA 98605 (US)
(74) Representative: Grünecker Patent- und Rechtsanwälte PartG mbB
(86) International application number: PCT/US2011/023815
(87) International publication number: WO 2011/142859

(56) References cited:
- EP-A1- 0 742 366
- DE-A1- 19 602 703
- US-A- 4 991 558
- US-A- 5 438 968
- US-A- 6 135 095
- US-A1- 2002 011 223
- US-A1- 2003 116 107
- US-B1- 6 360 724

## Description

### REFERENCE TO RELATED APPLICATION

The present application claims the benefit of U.S. Provisional Patent Application No. 61/302,034, filed February 5, 2010.

### TECHNICAL FIELD

The present disclosure is directed generally to two-stroke, fuel injected internal combustion engines for unmanned aircraft and associated systems and methods.

### BACKGROUND

Unmanned aircraft or air vehicles (UAVs) provide enhanced and economical access to areas where manned flight operations are unacceptably costly and/or dangerous. For example, unmanned aircraft outfitted with remotely operated movable cameras can perform a wide variety of surveillance missions, including spotting schools of fish for the fisheries industry, monitoring weather conditions, providing border patrols for national governments, and providing military surveillance before, during, and/or after military operations.

Many unmanned aircraft are powered by two-stroke internal combustion engines. Such engines are also widely utilized in small handheld devices or tools (e.g., chain saws, leaf blowers, weed trimmers, etc.) and a variety of different types of vehicles (e.g., jet skis, snowmobiles, motorcycles, etc.). One feature of a typical two-stroke engine is that the engine fires once every revolution. This gives two-stroke engines a significant power boost as compared to four-stroke engines that fire once every other revolution, and gives two-stroke engines an improved power-to-weight ratio as compared to many four-stroke engines. Examples of such two-stroke engines are disclosed in EP 0 742 366 A1, US 2002/0011223 A1 and US 2003/0116107 A1. Another feature of two-stroke engines is that the engines can work in any orientation. This feature can be important, for example, in unmanned aircraft that operate in a variety of different operating conditions and orientations. In contrast, a standard four-stroke engine may have problems with oil flow unless it is generally upright during operation. Moreover, solving this problem in four-stroke engines can add complexity and additional weight to the engines. Yet another feature of two-stroke engines is that such engines generally have a simplified construction with fewer components and, accordingly, less weight than many four-stroke engine configurations with similar power output.

Fuel injection systems are becoming widely utilized in two-stroke engines to increase fuel economy and engine performance. Fuel injection systems, for example, can provide an operator with precise control over the air and fuel mixture in two-stroke engines and significantly improve the performance of such engines, while allowing the engines to meet increasingly stringent emission standards. One drawback associated with fuel injection systems, however, is the added cost and complexity associated with implementation of such systems in two-stroke engines. Furthermore, fuel injections systems typically require a significant amount of electrical power for operation. Accordingly, while operating unmanned aircraft with fuel injected two-stroke engines provides a number of advantages associated with improved fuel economy, performance, and reduced emissions, there is a continual need to improve the effectiveness and efficiency of such engines. Examples of fuel injected two-stroke engines are e. g. disclosed in US 4 991 558, 5 438 968 and US 6 360 724 B1. US 6 135 095 discloses a generic two-stroke engine. US 6 135 095, US 4 991 558, 5 438 968 and US 6 360 724 B1 disclose skip-firing techniques in which firing events of certain cylinders are omitted.

### BRIEF DESCRIPTION OF THE DRWAINGS

Figure 1 is a partially schematic, isometric illustration of an unmanned aircraft having a two-stroke, fuel injected internal combustion engine configured in accordance with several embodiments of the disclosure.
Figure 2 is a schematic illustration of the two-stroke fuel injected engine of Figure 1 before installation with the aircraft.
Figure 3 is a graphical illustration of a fuel/air equivalence ratio during operation of the engine of Figure 2 in accordance with an embodiment of the disclosure.
Figures 4A-4D are schematic illustrations of a two-stroke fuel injected engine configured in accordance with another embodiment of the disclosure.
Figure 5 is a schematic illustration of a two-stroke fuel injected engine configured in accordance with yet another embodiment of the disclosure.

### DETAILED DESCRIPTION

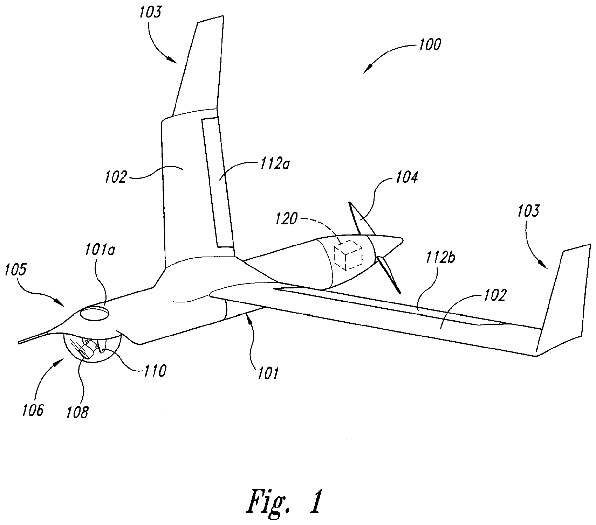

The present disclosure describes two-stroke, fuel injected internal combustion engines for unmanned aircraft and associated systems and methods. Many specific details of certain embodiments of the disclosure are set forth in the following description and in Figures 1-5 to provide a thorough understanding of these embodiments. Well-known structures, systems, and methods often associated with such systems have not been shown or described in detail to avoid unnecessarily obscuring the description of the various embodiments of the disclosure. In addition, those of ordinary skill in the relevant art will understand that additional embodiments may be practiced without several of the details described below.

Figure 1 is a partially schematic, isometric illustration of an unmanned aircraft 100 including a two-stroke, fuel injected internal combustion engine 120 (shown schematically) configured in accordance with several embodiments of the disclosure. The unmanned aircraft 100 can include a fuselage 101 and a pair of wings 102 extending outwardly from the fuselage 101. Each wing 102 can include an upwardly extending winglet 103 for lateral stability and control. The aircraft 100 can also include one or more movable control surfaces (two ailerons 112a and 112b are shown in the illustrated embodiment). Although the ailerons 112a and 112b are the only control surfaces shown in Figure 1, it will be appreciated that the aircraft 100 can include multiple aerodynamic control surfaces (e.g., rudder(s), elevators, stabilizers, ailerons, trailing and/or leading edge flaps, cowling flaps, attenuators, trim tabs, control tabs, speed brakes, etc.). A nose portion 105 of the fuselage 101 can include a turret assembly 106 having a device 108 (e.g., an imaging device, camera, surveillance sensor, or other payload) carried by a gimbal system 110 (shown schematically).

The aircraft 100 also includes a propeller 104 operably coupled to the engine 120. The propeller 104 is positioned at the aft end of the fuselage 101 to propel the aircraft 100 during flight. In other embodiments, the propeller 104 and/or the engine 120 may have a different arrangement on the aircraft 100 and/or relative to each other. The aircraft 100 may also include a number of other mechanisms, assemblies, or systems operably coupled to the engine 120.

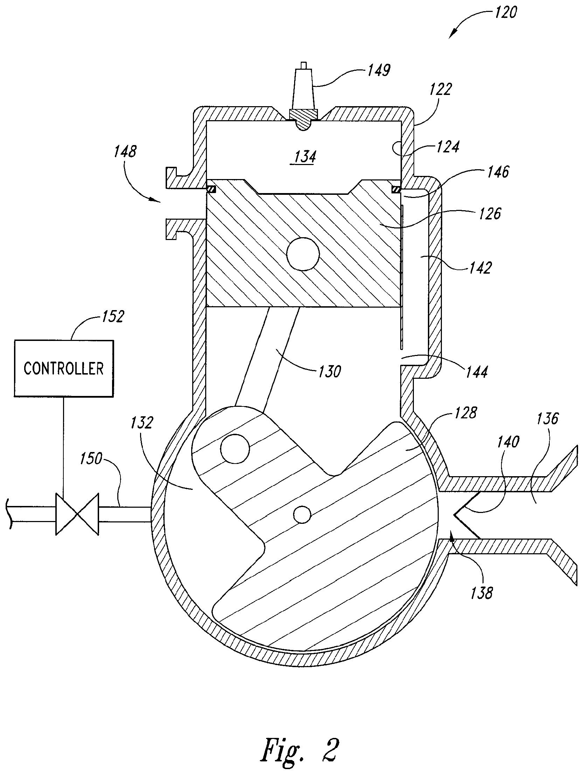

As described in detail below, embodiments of the engine 120 can include, for example, (a) an electronic fuel injection system configured to provide a desired low fuel rate by injecting fuel every nth compression cycle rather than every cycle (so-called "skip-cycle" operation), (b) one or more pressure sensors configured to measure fluctuations in peak crankcase pressure and use such fluctuations to control fuel injection delivery, and (c) a multi-cylinder configuration having a common crankcase with a fuel injection arrangement configured to mitigate or eliminate problems with mixed redistribution. Compared with conventional two-stroke engines, embodiments of the engine 120 are expected to provide improved engine and aircraft performance, better fuel economy, lower manufacturing costs, and greater overall efficiency in operation. It will be appreciated that an engine configured in accordance with this disclosure may include only one of the foregoing features, or may include two or more of the features in combination. Further details regarding the engine 120 and associated systems and methods are described below with reference to Figures 2-5.

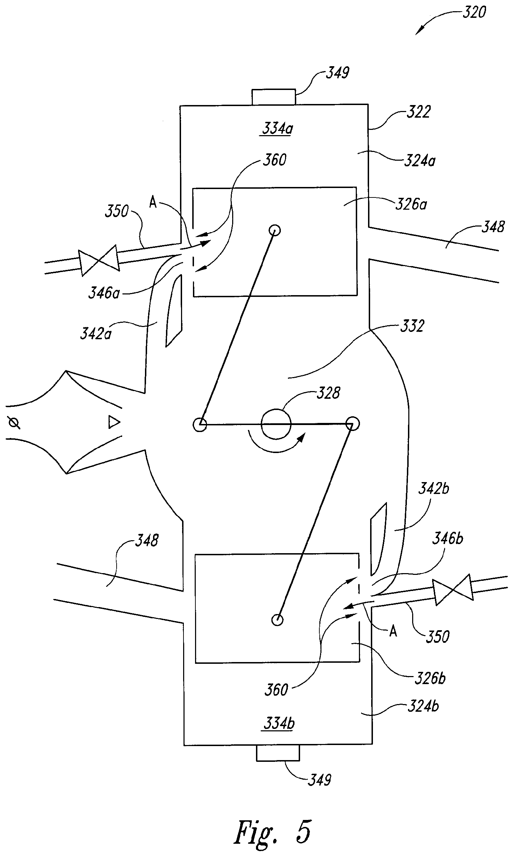

Figure 2 is a schematic illustration of the two-stroke fuel injected engine 120 before installation with the aircraft 100 (Figure 1). In the embodiment illustrated in Figure 2, which does not form part of the invention, only a single cylinder of the engine 120 is shown. It will be appreciated, however, that the engine 120 may have one or more additional cylinders (see, e.g., Figure 5 described below). For purposes of illustration, a number of components of the engine 120 are not shown or described. Furthermore, the sizes and relative positions of the elements in Figure 2 and the other drawings in the disclosure are not necessarily drawn to scale, and certain elements may be arbitrarily enlarged and positioned to improve drawing legibility.

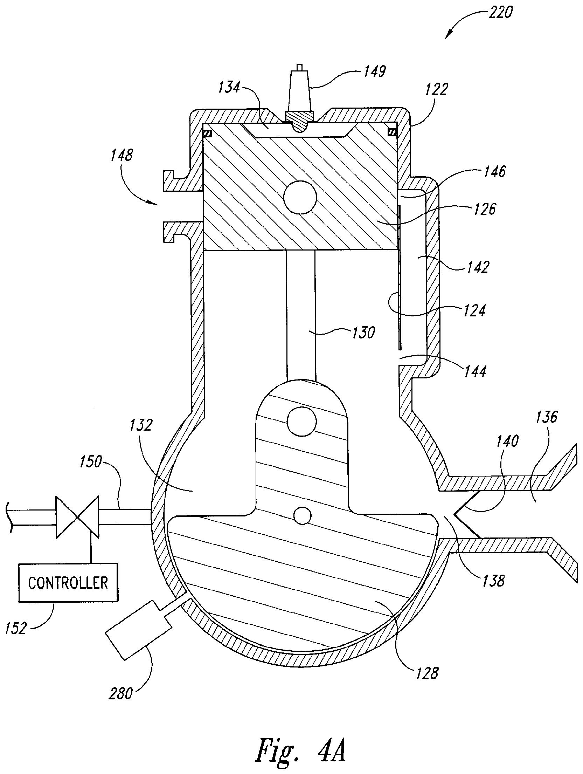

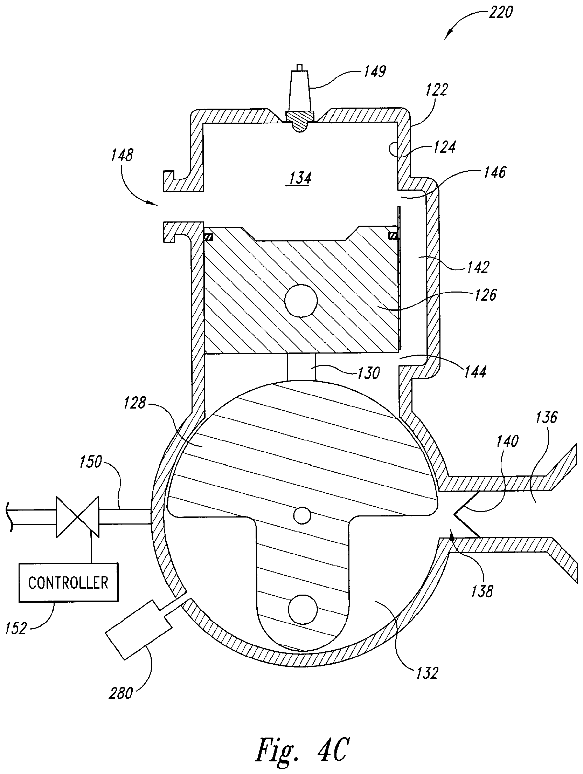

The engine 120 includes a cylinder block 122 having a cylinder bore 124 formed therein. The engine 120 also includes a piston 126 slidably housed in the cylinder bore 124 and connected to a crankshaft 128 via a connecting rod 130. The piston 126 is configured to reciprocably move relative to the cylinder bore 124 as the crankshaft 128 rotates within a crankcase 132. The piston 126 and the cylinder bore 124 together define a variable volume combustion chamber 134. A transfer or scavenge passage 142 extends through the cylinder block 122 between the crankcase 132 and the combustion chamber 134. More specifically, the transfer passage 142 has a first end 144 in communication with the crankcase 132 and a second end or transfer port 146 positioned to be opened and closed relative to the combustion chamber 134 as the piston 126 slidably moves within the cylinder bore 124 between a top dead center position (see Figure 4A) and a bottom dead center position (see Figure 4C). The engine 120 is a heavy fuel engine (HFE) configured to use kerosene-based heavy fuels (e.g., JP-5, JP-8, Jet-A, D-2 diesel). It will be appreciated, however, that the disclosure is not limited to HFEs, and the various embodiments described herein may be used with gasoline-powered two-stroke engines in addition to HFEs.

The engine 120 also includes an air induction system comprising an air intake track or passage 136 having an inlet portion 138 in fluid communication with crankcase 132. One or more check valves 140 (e.g., reed type or rotary check valves) are positioned at the inlet portion 138 of the air intake passage 136 and configured to prevent undesirable reverse flow. An exhaust system comprising an exhaust passage 148 is in communication with the combustion chamber 124 and configured to exhaust gases to the atmosphere. The engine 120 also includes one or more ignition sources (e.g., spark plugs) 149 carried by a cylinder head and configured to fire a charge in the combustion chamber 134.

The engine 120 further includes a fuel injector 150 configured to supply fuel to the crankcase 132. In one embodiment not forming part of the invention, the fuel injector 150 can be configured for indirect injection of the fuel and a solenoid valve (not shown) can be used to help control the flow rate of fuel from the intake track into the crankcase 132. In other embodiments not forming part of the invention, however, the fuel injector 150 can be configured to directly inject fuel into the crankcase 132. In still other embodiments not forming part of the invention, the fuel injector 150 can have a different arrangement.

A fuel injection system controller 152 is operably coupled to the fuel injector 150 and configured to control operation of the fuel injector 150. The controller 152, for example, can be configured to receive information from the aircraft 100 (Figure 1) and the engine 120 and optimize engine performance based on such information. In the illustrated embodiment, which does not form part of the invention, for example, fuel delivery (i.e., an injection event) is controlled by a map schedule (not shown) stored in the controller 152 (e.g., in non-volatile memory) in which the controller 152 optimizes engine performance utilizing sensor data

(e.g., temperature, crankcase pressure, throttle position, crank timing, etc.) and skip-cycle techniques. In particular, the controller 152 is configured to vary the injection event based on the map schedule such that the injection event occurs every nth compression cycle of the engine 120 rather than every cycle.

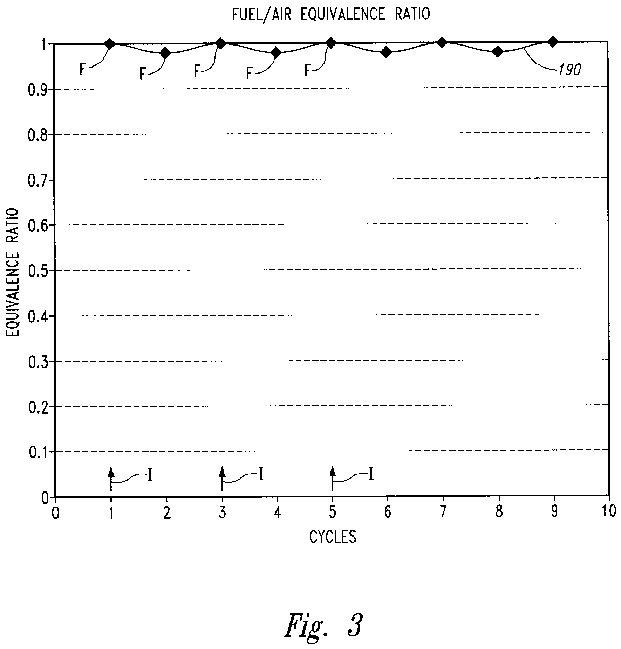

Without being bound by theory, the present inventors have discovered that introducing fuel into the engine 120 every nth cycle results in significant fuel savings without any appreciable loss in the fuel to air equivalence ratio or engine power. Figure 3, for example, is a graphical illustration of a fuel/air equivalence ratio 190 during skip-cycle operation of the engine 120 in accordance with an embodiment of the disclosure. As shown in Figure 3, combustion or firing events F occur every cycle of the engine 120 (e.g., when the piston 126 (Figure 2) is at top dead center). Injection events I, however, occur only every other cycle (e.g., cycle 1, cycle 3, cycle 5, etc.). As the graph illustrates, injecting only on odd-numbered cycles does not significantly affect the fuel/air equivalence ratio 190. More specifically, because the volume of the crankcase 132 (Figure 2) is much larger than the volume of the combustion chamber 134 (Figure 2), the fuel/air equivalence ratio 190 stays approximately the same during skip-cycle operation. In the illustrated embodiment, all the injection events are synchronous with the engine 120. In other embodiments, however, the injection events or pulses do not have to be synchronous. In still other embodiments, the injection events can occur every third cycle, every fourth cycle, etc. For example, the timing of the injection events as related to the combustion events can be adjusted based upon the particular engine configuration and/or the operating requirements for the aircraft.

Referring back to Figure 2, one feature of the engine 120 is that the skip-cycle techniques described herein allow the engine 120 to use a much larger fuel injector 150 than would typically be used. Larger fuel injectors are typically not used in small displacement engines, such as the engine 120, because the flow rate of such injectors is too high for the size of the engine. This problem is further magnified when the aircraft is operated at low speeds. The skip-cycle techniques described herein, however, enable the engine 120 to effectively utilize a larger size fuel injector 150 than conventional small displacement engines. This feature is expected to significantly reduce the costs associated with production and maintenance of the engine 120 without impacting performance. Another feature of the engine 120 is that utilizing the above-described skip-cycle techniques is expected to provide an approximately 10% improvement in fuel economy as compared with standard fuel injected two-stroke engines. Moreover, the engine 120 is expected to have consistently lower brake specific fuel consumption (BSFC) over a wider RPM band than conventional systems.

Still another feature of the engine 120 is that the skip-cycle techniques described herein are expected to significantly reduce electrical consumption for the aircraft 100 (Figure 1). In many unmanned aircraft, for example, the fuel injector 150 can be responsible for up to 90% of the total power required for operation of the electronic fuel injection system. Because the fuel injector 150 in the engine 120 does not have to fire on every cycle, the fuel injection system of the engine 120 is expected to use approximately 1/2 to 2/3 less power than that of conventional fuel injection systems.

Figures 4A-4D are schematic illustrations of a two-stroke fuel injected engine 220 configured in accordance with another embodiment, which does not form part of the invention. More specifically, Figures 4A-4D illustrate the engine 220 at various points within a cycle of the engine 220. The engine 220 differs from the engine 120 described above in that the engine 220 comprises one or more pressure sensors 280 configured to measure fluctuations in peak crankcase pressure and use such fluctuations to control fuel delivery via the fuel injection system. The engine 220 can function in generally the same way as the engine 120 described above with reference to Figures 1-3 and can have many of the same features and advantages. For example, the engine 220 may also be configured to utilize the skip-cycle techniques described above as well as various other features described herein.

Referring first to Figure 4A, the pressure sensor 280 comprises a pressure transducer positioned adjacent to and in communication with the crankcase 132. The arrangement of the pressure sensor 280 in the illustrated embodiment is merely representative of one specific configuration, and it will be appreciated that the pressure sensor 280 can be positioned at a number of different locations in the crankcase 132. Furthermore, although only a single pressure sensor 280 is shown, one or more additional pressure sensors 280 may be used. The pressure sensor 280 can include a variety of different suitable pressure sensing devices known to those of ordinary skill in the art.

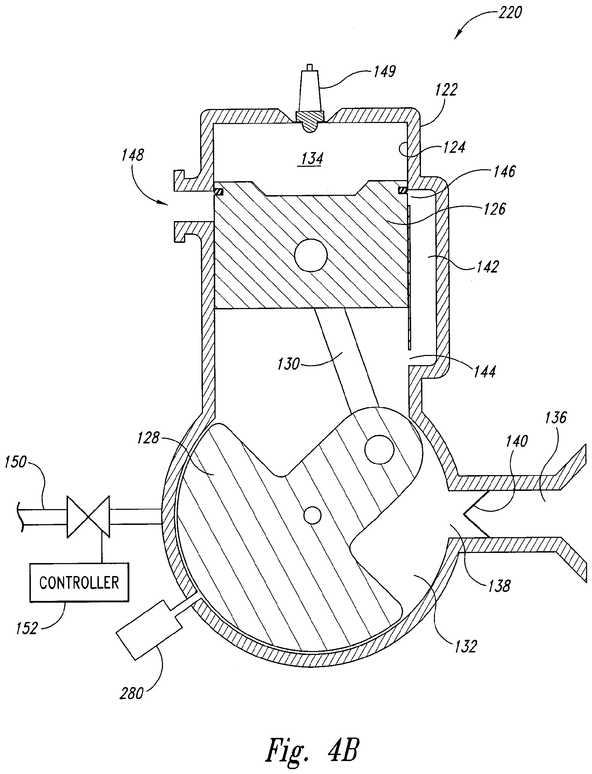

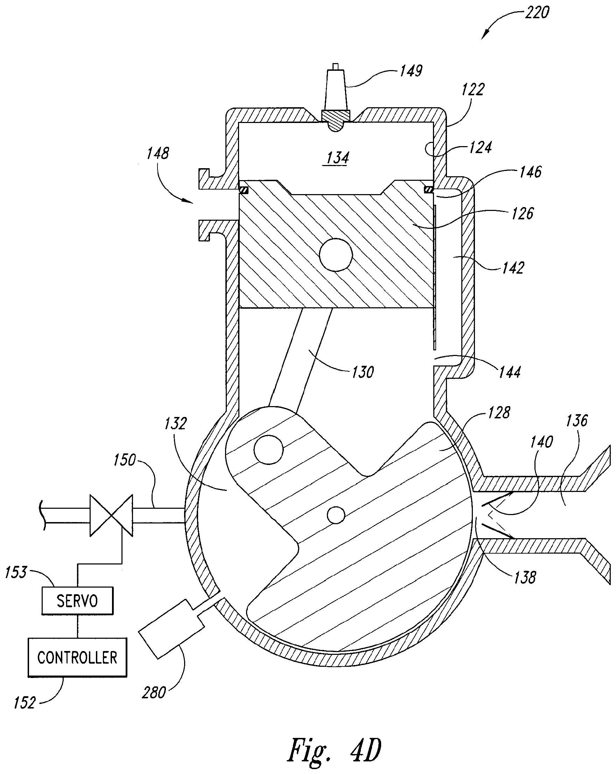

In the arrangement shown in Figure 4A, the piston 126 is at top dead center (TDC) and the ignition source 149 fires to ignite the compressed air/fuel mixture in the combustion chamber 134. Referring next to Figure 4B, the piston 126 starts downward under pressure from the combustion event in the combustion chamber 134. This downward movement or down stroke causes the mixture in the crankcase 132 to be compressed and the pressure in the crankcase 132 to increase. The pressure (as measured by the pressure sensor 280) peaks just before the piston 126 uncovers the transfer port 146 and moves to bottom dead center (BDC), as shown in Figure 4C. The peak pressure can vary depending on load for a given RPM due to, among other things, changes in the air intake track or passage 136. For example, as additional load is put on the engine 220 for a given RPM, additional air/fuel will be required and the air intake track 136 will be farther open. This allows more air under the piston 126 and results in a higher pressure spike as the piston 126 moves downward during the down stroke. Referring to Figure 4D, the piston 126 starts a compression or up stroke. A fresh fuel/air mixture is drawn into the crankcase 132 via the one or more valves 140 by a vacuum that is created during the upward stroke of the piston 126.

Data from the pressure sensor 280 is processed and sent to the fuel injection system controller 152. The controller 152 is configured to use the peak pressure data in conjunction with a fuel map, lookup table, or other suitable data analysis technique to control fuel delivery to the engine 220. More specifically, the controller 152 is configured to determine load based on data from the pressure sensor 280 and control one or more parameter of the injection event or pulse based on this data.

Many conventional four-stroke engines sense vacuum or "valley pressure" in the air intake track or passage of the engine to control and/or adjust the fuel injection system for the engine. One challenge in many conventional two-stroke engines, however, is that there is very little pressure fluctuation in the intake track (e.g., the air intake track 136). The present inventors have discovered, however, that by sensing the peak positive pressure in the crankcase 132 with the pressure sensor 280, the engine 220 can have the same type of control as many four-stroke engines because, as discussed above, the peak pressure in the engine 220 varies and changes slightly with differing loads at different RPMs.

One feature of the two-stroke engine 220 is that the engine 220 can utilize speed density control mode. As is known to those of ordinary skill in the art, speed density mode comprises monitoring a number of engine operating parameters (e.g., engine RPM, intake manifold pressure (or vacuum), intake charge air temperature, etc.). Based on these real-time inputs and predetermined operating parameter values, an electronic engine control (ECC) module (not shown) calculates the volume of air coming into the engine 220 at any given time. The ECC then calculates the appropriate amount of fuel needed to operate the engine 220 at the air/fuel ratio specified in a target air/fuel ratio table or map. Speed density mode is expected to provide the engine 220 with a high degree of tunability for different engine loads, weather conditions, altitudes, etc. because all of these calculations happen in real time during operation.

Another feature of the engine 220 is that using peak pressure to control fuel delivery via the fuel injection system provides a means of either primary control or secondary, backup control of the fuel injection system 150 in the event of one or more sensor failures. For example, the pressure sensor 280 configured to measure the peak pressure in the crankcase 132 can provide a backup for the current sensors (e.g., piston position sensors, throttle position sensors, Hall Effect sensors, etc.). Still another feature of the engine 220 is that measuring the peak positive pressure with the pressure sensor 280 can function as a built-in diagnostic and/or engine health monitoring system. Any significant fluctuations in the measured pressure that are outside of a predetermined limit may provide advanced warning of other problems with the engine 220. The engine 220 can be configured to provide a notice or indication to an operator when any measured pressures are outside of a predetermined operational envelope.

Yet another feature of the engine 220 is that the peak crankcase pressure may be used as a fall-back fuel metering scheme in the event the throttle position sensor fails. In one embodiment, for example, the throttle servo pulse width may be used to infer the throttle position in the event the throttle position sensor fails. More specifically, in an aircraft in which the engine 220 is installed (e.g., the aircraft 100 of Figure 1), the throttle is controlled by, among other things, a servo, a motor, and associated electronics (shown collectively as servo 153 in Figure 4D) that convert a particular electronic pulse width to a particular angular position. Because of the fixed input-to-output transfer function of the servo and the fixed geometry of the servo/throttle combination, there is a fixed relationship between the servo pulse width and the throttle's mechanical position. The electronic fuel injection (EFI) controller normally uses a very accurate position sensor to determine throttle angle, but in the event of a failure of the throttle position sensor, the servo pulse width can be used to infer a reasonably accurate estimate of the throttle angle.

Figure 5 is a schematic illustration of a two-stroke fuel injected engine 320 configured in accordance with an embodiment of the invention. The engine 320 differs from the engines 120 and 220 described above in that the engine 320 comprises two cylinders 324 that share a common crankcase 332. More specifically, the engine 320 includes a first cylinder 324a having a first piston 326a coupled to a crankshaft 328, and a second cylinder 324b having a second piston 326b coupled to the crankshaft 328. The engine 320 can have a number of components generally similar to the engines 120 and 220 described above with reference to Figures 1-4D and can have many of the same features and advantages. For example, the engine 320 is also configured to utilize the skip-cycle and/or peak pressure techniques described above as well as various other features described herein.

The first piston 326a and the first cylinder 324a together define a first variable volume combustion chamber 334a, and the second piston 326b and the second cylinder 324b together define a second variable volume combustion chamber 334b. A first transfer or scavenge passage 342a extends through the cylinder block 322 between the crankcase 332 and the first combustion chamber 334a, and a second transfer or scavenge passage 342b extends through the cylinder block 322 between the crankcase 332 and the second combustion chamber 334b. The first transfer passage 342a includes a first transfer or boost port 346a, and the second transfer passage 342b includes a second transfer or boost port 346b. The first and second transfer ports 346a and 346b are positioned to be opened and closed as the corresponding first and second pistons 326a and 326b reciprocably move within the engine 320. More specifically, the first and second transfer ports 346a and 346b each include a first end in communication with the crankcase 332 and a second end spaced apart from the first end and positioned to be opened and closed relative to the corresponding combustion chamber as the first and second pistons 326a and 326b slidably move within the respect cylinders.

The engine 320 includes an air induction system comprising an air intake track or passage 336 having an inlet portion 338 in fluid communication with crankcase 332. One or more reed type or rotary check valves 340 are positioned at the inlet portion 338 of the air intake passage 336. Exhaust passages 348 are in communication with the first and second combustion chambers 334a and 334b and configured to exhaust gases to the atmosphere. The engine 320 also includes one or more ignition sources (e.g., spark plugs) 349 configured to fire a charge in the first and second combustion chambers 334a and 334b.

In many conventional multi-cylinder engines that share a common crankcase, fuel is injected directly into the crankcase. One problem with this arrangement, however, is that that the rotational movement of the crankshaft throws more fuel/air mixture toward one cylinder than the other. This unbalanced distribution causes the engine to operate inefficiently and can result in uneven or unbalanced power output from the engine. One feature of the engine 320, however, is that fuel is injected at or proximate to the transfer or boost ports 346a and 346b rather than into the crankcase 332. More specifically, the first and second pistons 326a and 326b each include one or more openings or apertures 360 extending through the skirt portions of each piston. The engine 320 includes fuel injectors 350 positioned at least proximate to the respective transfer ports 346a and 346b and configured to inject or supply fuel (as shown by arrows A) through the opening(s) 360 in the skirt portions of each piston 326a and 326b and into the respective combustion chambers 334a and 334b. In other embodiments not forming part of the invention, however, the skirt portions of each piston 326a and 326b may not have opening(s) 360. In these embodiments, the fuel injectors 350 may still be positioned to inject or supply fuel at or proximate to the transfer ports 346a and 346b of the engine 220 to the bottom of each piston 326a and 326b.

This arrangement is expected to significantly reduce or eliminate the problems associated with unbalanced distribution. For example, one advantage of this arrangement is that each combustion chamber 334a and 334b can receive the "ideal," generally balanced fuel/air mixture during operation. Thus, the engine 320 can consistently provide the desired power output and operate more efficiently than conventional multi-cylinder engines. In other embodiments, the fuel injectors 350 can have a different arrangement and/or be positioned at a different point relative to the
pistons 326a and 326b. In addition, although the engine 320 has two cylinders 324a and 324b, it will be appreciated that the engine 320 may have more than two cylinders.

One additional feature of the engine 320 is that the engine is expected to provide improved fuel evaporation performance as compared with conventional engines. For example, fuel (e.g., heavy fuel) injected into the engine 320 is injected or squirted onto the bottom of a hot piston, thus improving or enhancing evaporation of such fuel. Further, this arrangement is also expected to provide a cooling effect on the piston during operation.

In other embodiments not forming part of the invention, many of the arrangement/techniques described above could be used with a single cylinder engine. For example, the "under piston" injection described above with reference to Figure 5 that injects or shoots fuel through the piston skirt onto the bottom of the piston as described above could also provide useful piston cooling in single cylinder engines. In still further embodiments, the arrangements described above may also be used in engines having other configurations or features.

## Claims

1. A fuel injected, two-stroke internal combustion engine (120, 220, 320), comprising:
a cylinder block (122, 322) having a cylinder (124) formed therein;
a crankcase (132, 332) in fluid communication with the cylinder 124, 324);
a piston (126) slidably housed in the cylinder (124, 324) and operably coupled to a crankshaft (128, 328) in the crankcase (132, 332), wherein the piston (126) and the cylinder (124) define, at least in part, a variable volume combustion chamber (134);
a fuel injector (150) positioned to supply fuel to the cylinder (124, 324);
a pressure sensor (280) in communication with the crankcase (132, 332) and configured to measure a peak pressure in the crankcase (132, 332); and
a fuel injection system controller (152) operably coupled to the fuel injector (150) and configured to control operation of the fuel injector (150),
**characterized in that** the fuel injection system controller (152) is configured to vary an injection event of the fuel injector (150) such that the injection event occurs every nth compression cycle of the engine (120, 220, 320), wherein n is 2 or a number greater than 2, and wherein the fuel injection system controller (152) is configured to modify one or more parameters of the injection event in response to the measured peak pressure,
wherein the cylinder is a first cylinder (324a), the piston is a first piston (326a) comprising a first piston skirt and one or more first apertures (360) extending completely through the piston skirt, the combustion chamber (334a) is a first combustion chamber, and the fuel injector is a first fuel injector (350), and wherein the engine further comprises:
a first transfer passage (342a) extending through the cylinder block (322) between the crankcase (332) and the first combustion chamber (334a), wherein the first transfer passage (342a) has a first end in communication with the crankcase (332) and a second end spaced apart from the first end and positioned to be opened and closed relative to the first combustion chamber (334a) as the first piston (326a) reciprocably moves within the first cylinder (324a);
a second cylinder (324b) opposite the first cylinder (324a) and in fluid communication with the crankcase (332);
a second piston (326b) slidably housed in the second cylinder (324b) and operably coupled to the crankshaft (328) in the crankcase (332), wherein the second piston (326b) and the second cylinder (324b) define, at least in part, a second variable volume combustion chamber (334b), and wherein the second piston (326b) comprises a second piston skirt and one or more second apertures (360) extending completely through the second piston skirt; and
a second transfer passage (342b) extending through the cylinder block (322) between the crankcase (332) and the second combustion chamber (334b), wherein the second transfer passage (342b) has a first end in communication with the crankcase (332) and a second end spaced apart from the first end and positioned to be opened and closed relative to the second combustion chamber (334b) as the second piston (326b) reciprocably moves within the second cylinder (324b),
wherein the first fuel injector (350) is positioned adjacent to the second end of the first transfer passage (342a) to supply fuel directly to the first combustion chamber (334a) through the one or more first apertures (360) in the first piston skirt,
wherein the second fuel injector (350) is positioned adjacent to the second end of the second transfer passage (342b) to supply fuel directly to the second combustion chamber (334b) through the one or more second apertures (360) in the second piston skirt.

2. The engine of claim 1 wherein the fuel injection system controller (152) is configured to vary the injection event based, at least in part, on a map schedule stored in non-volatile memory of the fuel injection system controller (152), and one or more of the following sensed engine parameters: temperature, crankcase pressure, throttle position, and crank timing.

3. The engine of one of the previous claims wherein the engine (120, 220, 320) is a heavy fuel engine (HFE) configured to use kerosene based heavy fuels.

4. An aircraft system, comprising:
the two-stroke, fuel injected internal combustion engine of claim 1, 2 or 3 configured to be carried by an unmanned aircraft (100).

5. The aircraft system of claim 4 wherein the engine (120, 220, 320) is a gasoline powered engine.

6. The aircraft system of claim 4 or 5 wherein the injection event is either synchronous or non-synchronous with the engine cycle.

7. The aircraft system of one of claims 4 to 6 wherein the engine (120, 220, 320) is configured to operate using speed density control mode.

8. The aircraft system of one of claims 4 to 7, further comprising a throttle operably coupled to the engine (120, 220, 320), wherein the throttle is controlled, at least in part, by a servo and a servo controller operably coupled to the servo and configured to convert a servo pulse width to a particular angular position of the throttle.

9. The aircraft system of claim 8 wherein the servo pulse width is configured to be used as a secondary or backup input to infer the throttle position in the event of throttle position sensor failure.

10. An unmanned aircraft (100), comprising the aircraft system of any of claims 4 to 9, further comprising:
a fuselage (101);
a propeller (104) carried by the fuselage (101); and wherein
the engine (120, 220, 320) is a two-stroke, fuel injected heavy fuel engine (HFE) carried by the fuselage (101) and operably coupled to the propeller (104).

11. The unmanned aircraft of claim 10 wherein the fuel injection controller (152) is configured to use the sensed peak pressure as a primary input for modifying the injection event.

12. The unmanned aircraft of claim 10 or 11 wherein the fuel injection controller (152) is further configured to use a throttle position sensor input as a primary input for modifying the injection event, and wherein the fuel injection controller (152) is configured to use the sensed peak pressure as a secondary or backup input for modifying the injection event.

## Patentansprüche

1. Zweitaktbrennkraftmaschine mit Kraftstoffeinspritzung (120, 220, 320), umfassend:
einen Zylinderblock (122, 322), in dem ein Zylinder (124) ausgebildet ist;
ein Kurbelgehäuse (132, 332), das in Fluidverbindung mit dem Zylinder (124, 324) steht;
einen Kolben (126), der gleitfähig in dem Zylinder (124, 324) angeordnet und betriebsfähig mit einer Kurbelwelle (128, 328) in dem Kurbelgehäuse (132, 332) gekoppelt ist, wobei der Kolben (146) und der Zylinder (124) zumindest zum Teil eine volumenveränderliche Brennkammer (134) definieren;
einen Kraftstoffeinspritzer (150), der zum Leiten von Kraftstoff in den Zylinder (124, 324) angeordnet ist;
einen Drucksensor (280), der mit dem Kurbelgehäuse (132, 332) in Verbindung steht und dazu konfiguriert ist, einen Spitzendruck im Kurbelgehäuse (132, 332) zu messen; und
eine Kraftstoffeinspritzungs-Systemsteuerung (152), die betriebsfähig mit dem Kraftstoffeinspritzer (150) verbunden und dazu konfiguriert ist, den Betrieb des Kraftstoffeinspritzers (150) zu steuern,
**dadurch gekennzeichnet, dass** die Kraftstoffeinspritzungs-Systemsteuerung (152) dazu konfiguriert ist, ein Einspritzereignis des Kraftstoffeinspritzers (150) so zu variieren, dass das Einspritzereignis in jedem n-ten Verdichtungstakt des Motors (120, 220, 320) auftritt, wobei n gleich 2 oder eine Zahl größer als 2, und wobei die Kraftstoffeinspritzungs-Systemsteuerung (152) dazu konfiguriert ist, einen oder mehrere Parameter des Einspritzereignisses in Reaktion auf den gemessenen Spitzendruck zu modifizieren,
wobei der Zylinder ein erster Zylinder (324a) ist, der Kolben ein erster Kolben (326a) ist, umfassend einen ersten Kolbenmantel und eine oder mehrere erste Öffnungen (360), die sich vollständig durch den Kolbenmantel erstrecken, die Brennkammer (334a) eine erste Brennkammer ist, und der Kraftstoffeinspritzer ein erster Kraftstoffeinspritzer (350) ist, und wobei der Motor des Weiteren umfasst:
einen ersten Querdurchgang (342a), der sich durch den Zylinderblock (322) zwischen dem Kurbelgehäuse (332) und der ersten Brennkammer (334a) erstreckt, wobei der erste Querdurchgang (342a) ein erstes Ende aufweist, das mit dem Kurbelgehäuse (332) in Verbindung steht, und ein zweites Ende, welches das erste Ende beabstandet und so angeordnet ist, dass es relativ zu der ersten Brennkammer (334a) geöffnet und geschlossen wird, wenn sich der erste Kolben (326a) in dem ersten Zylinder (324a) hin- und her bewegt;
einen zweiten Zylinder (324b) gegenüber dem ersten Zylinder (324a), der in Fluidverbindung mit dem Kurbelgehäuse (332) steht;
einen zweiten Kolben (326b), der gleitfähig in dem zweiten Zylinder (324b) angeordnet und betriebsfähig mit der Kurbelwelle (328) in dem Kurbelgehäuse (332) verbunden ist, wobei der zweite Kolben (326b) und der zweite Zylinder (324b) zumindest zum Teil eine volumenveränderliche Brennkammer (334b) definieren, und wobei der zweite Kolben (326b) einen zweiten Kolbenmantel und eine oder mehrere zweite Öffnungen (360) umfasst, die sich vollständig durch den zweiten Kolbenmantel erstrecken; und
einen zweiten Querdurchgang (342b), der sich durch den Zylinderblock (322) zwischen dem Kurbelgehäuse (332) und der zweiten Brennkammer (334b) erstreckt, wobei der zweite Querdurchgang (342b) ein erstes Ende aufweist, das mit dem Kurbelgehäuse (332) in Verbindung steht, und ein zweites Ende, welches das erste Ende beabstandet und so angeordnet ist, dass es relativ zu der zweiten Brennkammer (334b) geöffnet und geschlossen wird, wenn sich der zweite Kolben (326a) in dem zweiten Zylinder (324b) hin- und herbewegt,
wobei der erste Kraftstoffeinspritzer (350) neben dem zweiten Ende des ersten Querdurchgangs (342a) angeordnet ist, um Kraftstoff direkt in die erste Brennkammer (334a) durch die einen oder mehreren ersten Öffnungen (360) in dem ersten Kolbenmantel zu leiten,
wobei der zweite Kraftstoffeinspritzer (350) neben dem zweiten Ende des zweiten Querdurchgangs (342b) angeordnet ist, um Kraftstoff direkt in die zweite Brennkammer (334b) durch die einen oder mehreren zweiten Öffnungen (360) in dem zweiten Kolbenmantel zu leiten.

2. Motor nach Anspruch 1, wobei die Kraftstoffeinspritzungs-Systemsteuerung (152) dazu konfiguriert ist, das Einspritzereignis basierend zumindest zum Teil auf einem Kartenablaufplan, der in einem nicht flüchtigen Speicher der Kraftstoffeinspritzungs-Systemsteuerung (152) gespeichert ist, und einem oder mehreren der folgenden erfassten Motorparameter zu variieren: Temperatur, Kurbelgehäusedruck, Drosselklappenposition und einem Kurbelzeitpunkt.

3. Motor nach einem der vorhergehenden Ansprüche, wobei der Motor (120, 220, 320) ein Schwerkraftstoffmotor (heavy fuel engine, HSE) ist, der dazu konfiguriert ist, auf Schwerkraftstoffen basiertes Kerosin zu verwenden.

4. Luftfahrzeugsystem, umfassend:
die Zweitaktbrennkraftmaschine mit Kraftstoffeinspritzung nach Anspruch 1, 2 oder 3, die dazu konfiguriert ist, von einem unbemannten Luftfahrzeug (100) getragen zu werden.

5. Luftfahrzeugsystem nach Anspruch 4, wobei der Motor (120, 220, 320) ein benzinbetriebener Motor ist.

6. Luftfahrzeugsystem nach Anspruch 4 oder 5, wobei das Einspritzereignis entweder synchron oder nicht synchron mit dem Motortakt ist.

7. Luftfahrzeugsystem nach einem der Ansprüche 4 bis 6, wobei der Motor (120, 220, 320) dazu konfiguriert ist, unter Verwendung eines drehzahldichteabhängigen Steuermodus zu arbeiten.

8. Luftfahrzeugsystem nach einem der Ansprüche 4 bis 7, des Weiteren umfassend eine Drosselklappe, die betriebsfähig mit dem Motor (120, 220, 320) verbunden ist, wobei die Drosselklappe zumindest teilweise von einem Servomotor und einer Servosteuerung gesteuert wird, die betriebsfähig mit dem Servomotor verbunden und dazu konfiguriert ist, eine Servopulsbreite in eine bestimmte Winkelposition der Drosselklappe zu konvertieren.

9. Luftfahrzeugsystem nach Anspruch 8, wobei die Servopulsbreite dazu konfiguriert ist, als eine sekundäre oder Back-up-Eingabe verwendet zu werden, um die Drosselklappenposition herzuleiten, falls der Drosselklappenpositionssensor ausfällt.

10. Unbemanntes Luftfahrzeug (100), umfassend das Luftfahrzeugsystem nach einem der Ansprüche 4 bis 9, des Weiteren umfassend:
einen Rumpf (101);
einen Propeller (104), der von dem Rumpf (101) getragen wird; und wobei
der Motor (120, 220, 320) ein Zweitakt-Schwerkraftstoffmotor (HSE) mit Kraftstoffeinspritzung ist, der von dem Rumpf (101) getragen wird und betriebsfähig dem Propeller (104) verbunden ist.

11. Unbemanntes Luftfahrzeug nach Anspruch 10, wobei die Kraftstoffeinspritzungssteuerung (152) dazu konfiguriert ist, den ermittelten Spitzendruck als primäre Eingabe zum Modifizieren des Einspritzereignisses zu verwenden.

12. Unbemanntes Luftfahrzeug nach Anspruch 10 oder 11, wobei die Kraftstoffeinspritzungssteuerung (152) des Weiteren dazu konfiguriert ist, eine Drosselklappenpositionssensoreingabe als primäre Eingabe zum Modifizieren des Einspritzereignisses zu verwenden, und wobei die Kraftstoffeinspritzungssteuerung (152) dazu konfiguriert ist, den ermittelten Spitzendruck als sekundäre oder Back-up-Eingabe zum Modifizieren des Einspritzereignisses zu verwenden.

## Revendications

1. Moteur à combustion interne à deux temps à injection de combustible (120, 220, 320) comprenant:
un bloc-cylindres (122, 322) dans lequel est formé un cylindre (124);
un carter (132, 332) en communication fluide avec le cylindre 124, 324);
un piston (126) logé de manière coulissante dans le cylindre (124, 324) et couplé de manière opérationnelle à un vilebrequin (128, 328) dans le carter (132, 332), dans lequel le piston (126) et le cylindre (124) définissent, au moins en partie, une chambre de combustion à volume variable (134);
un injecteur de combustible (150) positionné pour fournir du combustible au cylindre (124, 324);
un capteur de pression (280) en communication avec le carter (132, 332) et configuré pour mesurer une pression de pointe dans le carter (132, 332); et
un contrôleur de système d'injection de combustible (152) couplé de manière opérationnelle à l'injecteur de combustible (150) et configuré pour commander le fonctionnement de l'injecteur de combustible (150),
**caractérisé en ce que** le contrôleur de système d'injection de combustible (152) est configuré pour faire varier un événement d'injection de l'injecteur de combustible (150) de sorte que l'événement d'injection survienne tous les nième cycles de compression du moteur (120, 220, 320) ou un nombre supérieur à 2, et dans lequel le contrôleur de système d'injection de combustible (152) est configuré pour modifier un ou plusieurs paramètres de l'événement d'injection en réponse à la pression maximale mesurée,
dans lequel le cylindre est un premier cylindre (324a), le piston est un premier piston (326a) comprenant une première jupe de piston et une ou plusieurs premières ouvertures (360) se prolongeant complètement à travers la jupe de piston, la chambre de combustion (334a) est une première chambre de combustion, et l'injecteur de combustible est un premier injecteur de combustible (350), et dans lequel le moteur comprend en outre:
un premier passage de transfert (342a) traversant le bloc-cylindres (322) entre le carter (332) et la première chambre de combustion (334a), le premier passage de transfert (342a) ayant une première extrémité en communication avec le carter (332) et une seconde extrémité espacée de la première extrémité et positionnée pour s'ouvrir et se fermer par rapport à la première chambre de combustion (334a) lorsque le premier piston (326a) effectue un mouvement de va-et-vient à l'intérieur du premier cylindre (324a);
un second cylindre (324b) opposé au premier cylindre (324a) et en communication fluide avec le carter (332);
un second piston (326b) logé de manière coulissante dans le second cylindre (324b) et couplé de manière fonctionnelle au vilebrequin (328) dans le carter (332), le second piston (326b) et le second cylindre (324b) définissant, au moins en partie, une seconde chambre de combustion à volume variable (334b), et dans lequel le second piston (326b) comprend une seconde jupe de piston et une ou plusieurs secondes ouvertures (360) se prolongeant complètement à travers la seconde jupe de piston; et
un second passage de transfert (342b) traversant le bloc-cylindres (322) entre le carter (332) et la seconde chambre de combustion (334a), le second passage de transfert (342a) ayant une première extrémité en communication avec le carter (332) et une seconde extrémité espacée de la première extrémité et positionnée pour s'ouvrir et se fermer par rapport à la seconde chambre de combustion (334b) lorsque le second piston (326b) effectue un mouvement de va-et-vient à l'intérieur du second cylindre (324b),
dans lequel le premier injecteur de combustible (350) est positionné adjacent à la seconde extrémité du premier passage de transfert (342a) pour fournir du combustible directement à la première chambre de combustion (334a) à travers la ou les premières ouvertures (360) dans la première jupe de piston,
dans lequel le second injecteur de combustible (350) est positionné adjacent à la seconde extrémité du second passage de transfert (342b) pour fournir du combustible directement à la seconde chambre de combustion (334b) à travers la ou les secondes ouvertures (360) dans la seconde jupe de piston.

2. Moteur selon la revendication 1, dans lequel le contrôleur de système d'injection de combustible (152) est configuré pour faire varier l'événement d'injection en fonction, au moins en partie, d'une planification stockée dans une mémoire non volatile du contrôleur de système d'injection de combustible (152) et en fonction d'un ou plusieurs des paramètres de moteur détectés suivants: température, pression dans le carter, position de l'accélérateur et calage du vilebrequin.

3. Moteur selon l'une des revendications précédentes, dans lequel le moteur (120, 220, 320) est un moteur à combustible lourd -HFE) configuré pour utiliser des combustibles lourds à base de kérosène.

4. Système d'avion, comprenant:
le moteur à combustion interne à deux temps, à injection de combustible, selon les revendications 1, 2 ou 3, configuré pour être porté par un avion sans pilote (100).

5. Système d'avion selon la revendication 4, dans lequel le moteur (120, 220, 320) est un moteur à essence.

6. Système d'avion selon les revendications 4 ou 5, dans lequel l'événement d'injection est synchrone ou non synchrone avec le cycle du moteur.

7. Système d'avion selon l'une des revendications 4 à 6, dans lequel le moteur (120, 220, 320) est configuré pour fonctionner en utilisant le mode de contrôle de densité de vitesse.

8. Système d'avion selon l'une des revendications 4 à 7, comprenant en outre un étrangleur couplé de manière fonctionnelle au moteur (120, 220, 320), dans lequel l'étrangleur est commandé, au moins en partie, par un servo et une servocommande couplé de manière fonctionnelle au servo et configuré pour convertir une largeur d'impulsion servo en une position angulaire particulière de l'étrangleur.

9. Système d'avion selon la revendication 8, dans lequel la largeur d'impulsion servo est configurée pour s'utiliser comme une entrée secondaire ou de secours pour déduire la position de l'étrangleur en cas de panne du capteur de position de l'étrangleur.

10. Avion sans pilote (100), comprenant le système d'avion selon l'une quelconque des revendications 4 à 9, comprenant en outre:
un fuselage (101);
une hélice (104) portée par le fuselage (101); et dans lequel
le moteur (120, 220, 320) est un moteur à combustible lourd (HFE) à deux temps, à injection de combustible, porté par le fuselage (101) et couplé de manière opérationnelle à l'hélice (104).

11. Avion sans pilote selon la revendication 10, dans lequel le contrôleur d'injection de carburant (152) est configuré pour utiliser la pression maximale détectée comme entrée primaire pour modifier l'événement d'injection.

12. Avion sans pilote selon les revendications 10 ou 11, dans lequel le contrôleur d'injection de combustible est en outre configuré pour utiliser une entrée de capteur de position d'étrangleur comme entrée primaire pour modifier l'événement d'injection, et dans lequel le contrôleur d'injection de combustible est configuré pour utiliser la pression maximale détectée comme entrée secondaire ou de secours afin de modifier l'événement d'injection.
